# EUROPÄISCHE PATENTANMELDUNG

(11) **EP 2 368 792 A2**
(43) Veröffentlichungstag der Anmeldung: **28.09.2011**
(21) Anmeldenummer: 11155323.6
(22) Anmeldetag: 22.02.2011
(51) Int. Cl.: B64C 3/18

(54) **Stegverbindung für einen Flugzeugflügel**

(30) Priorität: 22.03.2010 DE 102010003114
(71) Anmelder: REpower Systems AG, 22297 Hamburg (DE)
(72) Erfinder: Flach, Christian, 24790, Schacht Audorf (DE)
(74) Vertreter: Seemann, Ralph

(57) **Zusammenfassung**

Die Erfindung betrifft einen Steg (10, 10') mit zwei Stegfüßen (11, 11', 12, 12') zur Verbindung einer Druckseite (35) mit einer Saugseite (36) eines Flügels (37), wobei der Steg (10, 10') eine Längserstreckung (38) aufweist, die quer zur Erstreckung des Stegs von der Saugseite (36) zur Druckseite (35) ist. Die Erfindung betrifft ferner einen entsprechenden Flügel (37) und ein Verfahren zur Herstellung eines Flügels (37).

Der erfindungsgemäße Steg zeichnet sich dadurch aus, dass wenigstens ein Stegfuß (11, 11', 12, 12') quer zur Längserstreckung (38) zwei auf entgegengesetzten Seiten des Stegs (10, 10') angeordnete Verbindungsseiten (13-16') aufweist. Der erfindungsgemäße Flügel (37) weist einen erfindungsgemäßen Steg (10, 10') und einen Stützkörper (18-18") auf, der mit einem Stegfuß verbunden ist.

## Beschreibung

Die Erfindung betrifft einen Steg mit zwei Stegfüßen, wobei der Steg zur Verbindung einer Druckseite mit einer Saugseite eines Flügels vorgesehen ist, wobei der Steg eine Längserstreckung aufweist, die quer zur Erstreckung des Stegs von der Saugseite zur Druckseite ist. Die Erfindung betrifft ferner einen Flügel mit einem entsprechenden Steg. Die Erfindung betrifft ferner die Verwendung eines Stützkörpers bei einem Flügel zur Verbindung der Saugseite und der Druckseite mit einem Steg sowie ein Verfahren zur Herstellung eines Flügels.

Im Rahmen dieser Anmeldung beinhaltet der Begriff des Flügels eine Tragfläche eines Flugzeugs, einen Propeller eines Hubschraubers und insbesondere ein Rotorblatt einer Windenergieanlage. Sofern von einem Rotorblatt im Folgenden insbesondere im Zusammenhang mit der Figurenbeschreibung die Rede ist, soll auch implizit ein Tragflügel eines Flugzeuges oder ein Propeller eines Hubschraubers gemeint sein.

Flügel, die einen aerodynamischen Auftrieb nutzen, insbesondere Rotorblätter von Windenergieanlagen, werden im Betrieb erheblich belastet. Um insbesondere Zugkräfte aufnehmen zu können, werden zwischen der Druckseite und der Saugseite des Flügels bzw. des Rotorblatts ein oder mehrere Stege eingebracht bzw. eingeklebt, die sich von der Innenseite der Schale des Flügels auf der Druckseite zur Schale des Flügels auf der Saugseite erstrecken. Ein Steg erstreckt sich hierbei zumindest abschnittsweise entlang einer Längserstreckung des Flügels. Die entsprechenden Blattschalen sind hierbei vorzugsweise durch Gurte verstärkt, die zur Stabilitätserhöhung der Flügel bzw. Rotorblätter beitragen. Die Stege sind üblicherweise verbunden mit den jeweiligen Gurten, die auf der Saugseite bzw. der Druckseite der Flügel angeordnet sind und in Längserstreckung des Flügels sich, zumindest abschnittsweise, erstrecken. Zur Verbindung werden üblicherweise die Stege auf einer Seite mit Glasfasermatten mit den Gurten verklebt. Zur Verklebung dient üblicherweise ein Harz. Hierbei ergibt sich ein im Wesentlichen rechteckiger Winkel am Verbindungspunkt des Stegs mit dem Gurt. Bei Belastung der Flügel bzw. Rotorblätter kommt es so zu erheblichen Schälspannungen, die ein Lösen der Stegverklebung herbeiführen können und Beulen in den Schalen hervorrufen.

Zudem ist die Fertigung von Flügeln, insbesondere Rotorblättern, sehr zeitaufwändig, da insbesondere die Positionierung der Stege an den Gurten sehr aufwändig und schwierig ist.

Es ist Aufgabe der vorliegenden Erfindung, eine stabilere Stegverbindung in einem Flügel anzugeben, sowie eine Möglichkeit, die Herstellung der Flügel effizient zu gestalten.

Gelöst wird diese Aufgabe durch einen Steg mit zwei Stegfüßen zur Verbindung einer Druckseite mit einer Saugseite eines Flügels, wobei der Steg eine Längserstreckung aufweist, die quer zur Erstreckung des Stegs von der Saugseite zur Druckseite ist, der dadurch weitergebildet ist, dass wenigstens ein Stegfuß quer zur Längserstreckung zwei auf entgegengesetzten Seiten des Stegs angeordnete Verbindungsseiten aufweist. Die Längserstreckung des Stegs ist hierbei insbesondere entlang der Längserstreckung des Flügels.

Durch Verwendung von zwei auf entgegengesetzten Seiten des Stegs angeordneten Verbindungsseiten, mittels der eine Verbindung zu beispielsweise einem Gurt erfolgen kann, wird schon eine stärkere Verbindung erzielt. Bei bevorzugter Anordnung der Verbindungsseiten mit einem Winkel zueinander, der kleiner als 180° ist, werden die Schälspannungen bei Belastungen entsprechend vorzugsweise reduziert.

Die Verbindungsseiten auf den zwei entgegengesetzten Seiten des Stegs sind vorzugsweise an beiden Stegfüßen vorgesehen. Hierdurch kann sowohl auf der Saugseite als auch auf der Druckseite des Flügels eine sehr stabile Verbindung erzielt werden. Die Verbindungsseiten des Stegs bzw. der Stegfüße sind insbesondere nicht nur quer zur Längserstreckung des Stegs, sondern auch quer zur Erstreckung des Stegs von der Saugseite zur Druckseite hin orientiert. Vorzugsweise sind die Verbindungsseiten des Stegfußes gabelförmig im Querschnitt quer zur Längserstreckung zueinander. Hierbei sind vorzugsweise zwei Gabelzinken vorgesehen. Die Verbindungsseiten sind insbesondere lappenartig ausgebildet, beispielsweise aus glasfaserverstärkten Kunststoffmatten, die mit einem entsprechenden Harz versehen sind.

Vorzugsweise ist der Stegfuß wenigstens teilweise formkomplementär mit einem im Querschnitt keilförmigen oder gewölbten Stützkörper und/oder einer Blattschale und/oder einem Gurt einer Blattschale des Flügels. Hierbei ist insbesondere vorzugsweise die Blattschale und/oder der Gurt auch zumindest abschnittsweise keilförmig oder gewölbt geformt. Insbesondere kann der Stützkörper integral mit der Blattschale und/oder dem Gurt ausgebildet sein. Vorzugsweise ist der Stegfuß einstückig mit dem Steg oder als Aufsatz mit dem Steg verbunden. Als Aufsatz kann beispielsweise ein Profil, beispielsweise ein Strangpressprofil, dienen.

Die Aufgabe wird ferner durch einen Flügel mit einem erfindungsgemäßen Steg, der vorstehend beschrieben wurde, und einem Stützkörper, der an der Saugseite oder Druckseite innen in dem Flügel, insbesondere an einem Gurt, angeordnet ist und mit einem Stegfuß verbunden ist, gelöst. Der Stützkörper erstreckt sich hierbei vorzugsweise längsaxial mit dem Flügel.

Vorzugsweise ist sowohl an der Druckseite als auch an der Saugseite ein Stützkörper angeordnet, der mit jeweils einem Stegfuß verbunden ist. Unter verbunden wird im Rahmen der Verbindung insbesondere ein Verklebtsein verstanden.

Vorzugsweise ist der Stützkörper im Querschnitt quer zu dessen Längserstreckung keilförmig oder gewölbt, insbesondere konvex, ausgebildet. Hierdurch kann eine formkomplementäre Verbindung, also eine sehr gut passende Verbindung zu dem Stegfuß des erfindungsgemäßen Steges erzielt werden. Die Keilförmigkeit beinhaltet insbesondere auch einen Keil mit abgerundeten Kanten. Die gewölbte Form kann ein Polygon, insbesondere vorzugsweise mit abgerundeten Kanten wie beispielsweise ein Dreieck oder eine Raute, darstellen. Unter einer gewölbten Form wird insbesondere auch eine Gauß-Verteilung oder eine ähnliche Kurvenform verstanden. Vorzugsweise hat der Keil zum Steg hin einen Winkel von 30° bis 120°, insbesondere von 50° bis 90°.

Vorzugsweise weist der Stützkörper eine Dichte von weniger als 200 kg/m³, insbesondere weniger als 100 kg/m³, insbesondere weniger als 35 kg/m³, auf. Der Stützkörper ist vorzugsweise aus einem Schaumstoff, aus Polyethylen, Polystyrol, Polyethylbuterephthalat, Balsaholz oder glasfaserverstärktem Kunststoff (GFK). Insbesondere werden die Verbindungsseiten des jeweiligen Stegfußes an den Flächen des Stützkörpers verklebt bzw. sind mit diesem verbunden.

Die Aufgabe wird ferner durch die Verwendung eines Stützkörpers innen an der Saugseite und/oder Druckseite eines Flügels zur Verbindung der Saugseite und/oder der Druckseite mit einem Steg, der sich von der Saugseite zur Druckseite erstreckt, gelöst, wobei der Stützkörper auf einem Gurt angeordnet ist oder einstückig mit dem Gurt ist. Die Anordnung des Stützkörpers auf einem Gurt beinhaltet insbesondere auch ein Verbundensein mit dem Gurt. Vorzugsweise ist der und/oder jeder Stützkörper mit einem Gurt verbunden oder einstückig mit dem Gurt. Der Gurt weist in diesem Fall einen entsprechenden Stützkörper auf, der insbesondere vorzugsweise längsaxial bzw. wenigstens abschnittsweise längserstreckt zum Flügel angeordnet ist und im Querschnitt quer zu seiner Längserstreckung keilförmig oder gewölbt, insbesondere konvex, ausgebildet ist.

Auch hier ist die Wölbung bzw. die Querschnittsform des Stützkörpers ein Polygon, insbesondere mit abgerundeten Kanten wie ein Dreieck oder eine Raute. Die konvexe Wölbung ist so zu verstehen, dass diese von der Seite aus gesehen, an der der Stützkörper angeordnet ist, eben konvex ausgebildet ist. Im Rahmen der Erfindung beinhaltet der Begriff Längserstreckung insbesondere vorzugsweise im Wesentlichen oder vollständig parallel zur Längsachse des Flügels bzw. bei einem gebogenen und/oder verdrehten (getwisteten) Flügel entlang der sich längs erstreckenden Kontur des Flügels.

Ferner wird die Aufgabe durch ein Verfahren zum Herstellen eines Flügels mit einer Druckseite und einer Saugseite gelöst, wobei auf der Druckseite und auf der Saugseite jeweils wenigstens ein Gurt vorgesehen ist, wobei auf wenigstens einem Gurt ein Stützkörper aufgebracht ist oder wird, wobei ein erfindungsgemäßer Steg, der vorstehend beschrieben wurde, mit einem Stützkörper derart verklebt wird, dass der Stützkörper zwischen die Verbindungsseiten des Stegfußes eingepasst wird. Insbesondere wird der Stützkörper entsprechend mit den Verbindungsseiten des Stegfußes verklebt. Durch diese Maßnahme ist eine sehr schnelle und effiziente Positionierung des Steges zwischen den Blattschalen bzw. Schalen des Flügels möglich. Hierdurch ergibt sich auch eine hohe Prozesssicherheit. Ferner wird Formbelegungszeit gespart, da der Steg oder die Stege ohne Zwischentrocknung nass in nass in zwei Schalenhälften bzw. in die entsprechenden Schalenabschnitte verklebt werden können. Zudem findet eine Stegpositionierung durch eine Art Selbstzentrierung der Stege statt. Hierdurch wird sichergestellt, dass die Stege immer an der korrekten Gurtposition verklebt sind. Hiermit entfällt ein sehr aufwändiges und kostenintensives Positionierungstool bzw. Positionierungsgerät.

Vorzugsweise wird auf jeder Seite des Stegs ein Stützkörper zwischen die Verbindungsseiten der Stegfüße eingepasst. Dieses ist im Rahmen der Erfindung auch anders herum zu verstehen, dass die Verbindungsseiten der Stegseiten auf die Stützkörper aufgebracht werden bzw. mit diesen entsprechend verbunden werden.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine dreidimensionale schematische Darstellung einer erfindungsgemäßen Stegverbindung,
- Fig. 2: eine schematische Schnittdarstellung einer erfindungsgemäßen Stegverbindung,
- Fig. 3: eine schematische Schnittdarstellung der Fertigung eines erfindungsgemäßen Stegs in einem anfänglichen Verfahrenszustand,
- Fig. 4: eine schematische Schnittdarstellung der Herstellung des Stegs gemäß Fig. 3 in einem fortgeschrittenen Verfahrenszustand,
- Fig. 5: eine schematische Schnittdarstellung der Herstellung eines erfindungsgemäßen Stegs gemäß Fig. 4 in einem weiteren fortgeschrittenen Verfahrenszustand,
- Fig. 6: eine schematische Schnittdarstellung der Herstellung eines erfindungsgemäßen Stegs in einem weiteren fortgeschrittenen Verfahrenszustand im Vergleich zu Fig. 5,
- Fig. 7: eine schematische Schnittdarstellung einer Gurtform,
- Fig. 8: schematisch einen Schnitt durch einen erfindungsgemäßen Stegfuß,

- Fig.9.: schematisch einen Schnitt einer Darstellung einer Stegverbindung.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

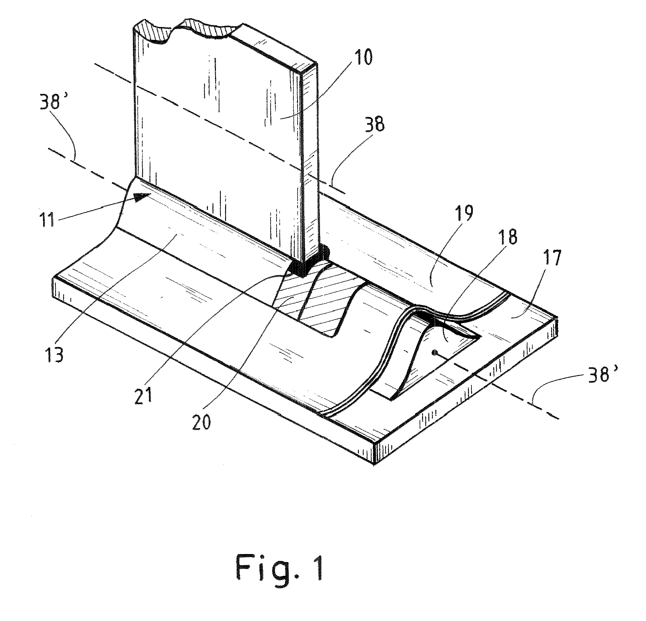

Fig. 1 zeigt eine erfindungsgemäße Stegverbindung in schematischer dreidimensionaler Darstellung. Auf einem Gurt 17 ist ein Stützkörper 18, beispielsweise aus Balsaholz oder glasfaserverstärktem Kunststoff, aufgebracht. Anstelle dieses Materials kann auch ein gehärteter Kunststoffschaum verwendet werden. Der Stützkörper 18 kann auch integral mit dem Gurt zusammen hergestellt sein und aus dem gleichen Material wie der Gurt bestehen. In diesem Ausführungsbeispiel ist allerdings der Stützkörper 18 auf dem Gurt 17 aufgeklebt. Der Stützkörper 18 hat eine Längserstreckung 38', die im Wesentlichen parallel zur Längsachse des Rotorblatts ist bzw. unter Umständen auch entsprechend wie der Gurt und das Rotorblatt verwunden, gebogen und/oder geflext sein kann. Die entsprechende Form des Stützkörpers 18 entlang der Längserstreckung 38' entspricht der Form des Flügels bzw. Rotorblatts an der entsprechenden Blattschale, an der der Gurt 17 angebracht ist.

Zusätzlich zur Verklebung des Stützkörpers 18 sind Laminatlagen 19 über den Gurt 17 und den Stützkörper 18 aufgebracht, um eine sicherere Verbindung vorzusehen. Auf den Laminatlagen 19 ist ein Kleber 20 aufgebracht und auf dem Kleber 20, der beispielsweise ein Harz sein kann, ist zum einen eine Stützauflage 21 und zum anderen eine Verbindungsseite 13 und auf der anderen verdeckten Seite eine Verbindungsseite 13' über dem Stützkörper 18 aufgeklebt. Die Verbindungsseiten 13 bzw. 13' sind Bestandteil des Stegfußes 11 des Steges 10. Der Steg 10 weist eine Längserstreckung 38 auf. In Fig. 1 ist nur ein Ausschnitt der entsprechenden gezeigten Komponenten dargestellt. Bei einem Flügel bzw. einem Rotorblatt ist naturgemäß die Längserstreckung 38 bzw. 38' deutlich größer als in Fig. 1 dargestellt.

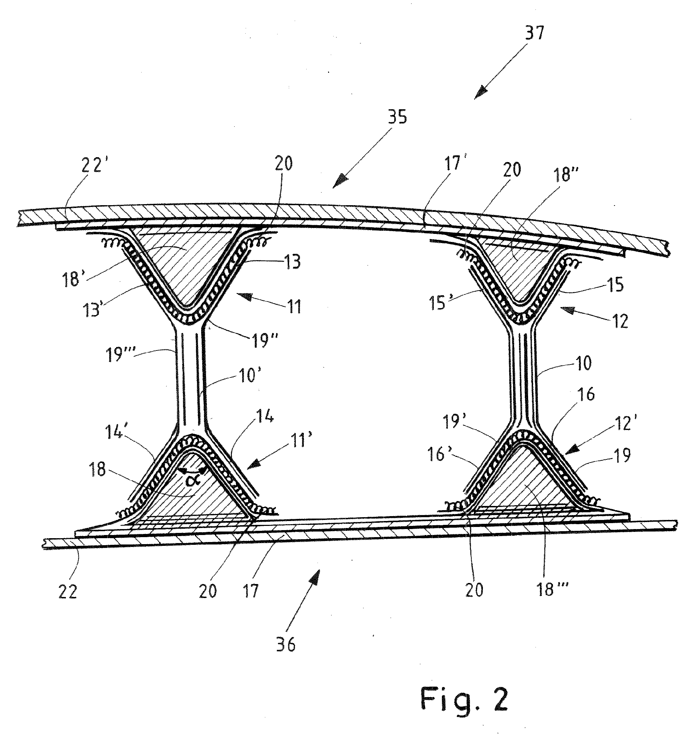

Fig. 2 zeigt einen Schnitt durch eine weitere erfindungsgemäße Stegverbindung, bei der zwei Stege 10 und 10', die zwischen Gurten 17 und 17' der Saugseite 36 und Druckseite 35 eines Rotorblatts 37 angeordnet sind, vorgesehen sind. Der Gurt 17 ist an der Blattschale 22 der Saugseite angebracht und der Gurt 17' an der Blattschale 22' der Druckseite 35. Der Steg 10 weist zwei Stegfüße 12 und 12' auf, die jeweils Verbindungsseiten 15 und 15' bzw. 16 und 16' aufweisen. Die Verbindungsseiten 15 und 15' sind mit einem Kleber 20 mit dem Stützkörper 18' bzw. auf dem Stützkörper 18' angeordneten Laminatlagen verbunden und auf der gegenüberliegenden Seite sind die Verbindungsseiten 16 und 16' mit einem Kleber 20 mit dem Stützkörper 18'" entsprechend verbunden. Gleiches gilt für den Steg 10', bei dem eine entsprechende Verbindung der Verbindungsseiten 13 und 13' mit dem Stützkörper 18' und der Verbindungsseiten 14 und 14' mit dem Stützkörper 18 vorgesehen ist. Die Stützkörper 18 bis 18'" sind entsprechend mit den Gurten 17 und 17' verbunden.

In einem Stützkörper, nämlich dem Stützkörper 18 ist ein Winkel α gezeigt, der einen Keilwinkel darstellt. Dieser beträgt etwa 60°. Die Stützkörper haben hier eine Form eines abgerundeten Keils im Querschnitt mit einem Keilwinkel α. Der Querschnitt kann auch als gewölbt, insbesondere konvex, angesehen werden. Dieses gilt auch für den Stützkörper 18 aus Fig. 1, der im Schnitt eine Art Gauß-Verteilung darstellt, also eine sehr harmonische Wölbung zeigt.

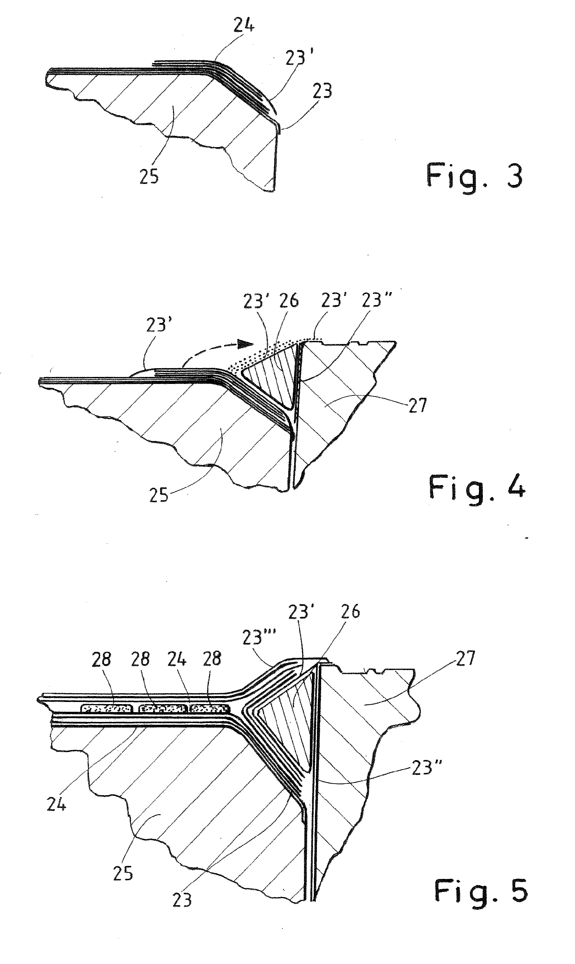

Die Figuren 3 bis 6 zeigen schematisch Schnittdarstellungen durch einen Teil der Formbelegung beim Herstellen eines erfindungsgemäßen Stegs. In Fig. 3 ist eine erste Form 25 dargestellt, auf die als erste Lage ein Abreißgewebe 23 aufgebracht ist und dann entsprechend mehrere Glasfasergewebelagen 24 in unterschiedlichen Längen. Der Abschluss dieser Glasfasergewebelagen bildet ein Abreißgewebe 23'.

Im nächsten Schritt, der in Fig. 4 dargestellt ist, ist noch ein zweiter Formkörper 26 vorgesehen, der eine entsprechende Form hat wie ein entsprechend zur Verbindung zu verwendender Stützkörper und außerdem ein dritter Formkörper 27. Zunächst wird zwischen dem zweiten Formkörper 26 und dem dritten Formkörper 27 ein weiteres Abreißgewebe 23" eingebracht und möglicherweise eine Fließhilfe, die nicht dargestellt ist. Dann wird das Abreißgewebe 23' in Pfeilrichtung, wobei der Pfeil hier gestrichelt dargestellt ist, umgeklappt auf den zweiten Formkörper 26 und teilweise auf den dritten Formkörper 27 und anschließen die kürzeren Laminatlagen 24 auch entsprechend umgeklappt. Diese Laminatlagen 24 bilden dann nach Fertigstellung des Stegs eine Verbindungsseite.

In Fig. 5 ist die Stegherstellung in einem fortgeschrittenen Verfahrensstadium dargestellt. Es sind zwischenzeitlich Füllkörper 28 in den Steg eingebracht worden und weitere Laminatlagen 24 aufgelegt worden. Der Abschluss der oben aufgelegten Laminatlagen 24 bildet ein Abreißgewebe 23"'.

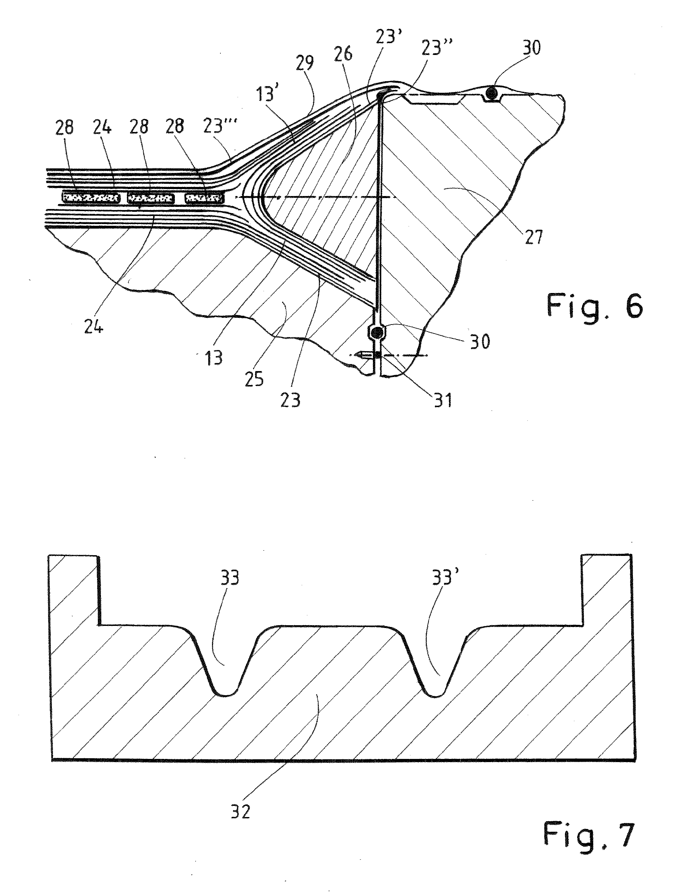

Am Ende wird wie in Fig. 6 dargestellt ist, eine Vakuumfolie 29 aufgebracht, die dichtend an einem Dichtband 30 aufgelegt ist. Ferner ist ein Dichtband 30' zwischen dem ersten Formkörper 25 und dem dritten Formkörper 27 vorgesehen. Zur besseren Positionierung dient hier ferner ein Zentrierstift 31 bzw. ein Zentrierbolzen 31.

Der Steg wird dann vorzugsweise mit einer Spritz-Press-Technik (Resin Transfer Moulding; RTM), eine Infusionstechnik (Resin Infusion Moulding; RIM) und insbesondere eine durch Vakuum unterstützte Infusionstechnik (Vacuum Assisted Resin Infusion; VAR) hergestellt. Entsprechend kann auch eine übliche Laminiertechnik verwendet werden, beispielsweise unter Verwendung von Prepregs. In dem Ausführungsbeispiel gemäß den Figuren 3 bis 6 wird bevorzugt ein RIM- oder VAR-Verfahren verwendet.

Bei der Herstellung eines Flügels bzw. Rotorblatts kann ein entsprechend hergestellter Steg vor der vollständigen Trocknung des verwendeten Harzes in die entsprechenden Blattschalen eingelegt werden und mit den jeweiligen Gurten bzw. Formkörpern, die auf den Gurten angeordnet sind bzw. mit diesen integral sind, verbunden werden.

Fig. 7 zeigt eine Gurtform 32, in der schon entsprechende Aussparungen 33, 33' vorgesehen sind, die zur Ausbildung von zwei Stützkörpern auf dem Gurt bzw. integral mit dem herzustellenden Gurt vorgesehen sind. Hierzu können dann entsprechende Glasfasergelege bzw. Glasfasergewebe in die Aussparungen 33 und 33' als auch in die darüber liegenden Gurtformaussparungen 33 und 33' eingebracht werden und entsprechend mit Harz wie üblich getränkt werden. Alternativ können auch zunächst ein paar wenige Glasfasergewebelagen eingebracht werden und als Zwischenschritt ein Stützkörper aus einem anderen Material bzw. vorgefertigte Stützkörper in die Aussparungen 33 und 33' eingebracht werden, um anschließend Glasfasergewebe aufzulegen, die nach Beendigung der Fertigung den jeweiligen Gurt darstellen.

Anstelle von Glasfasergewebe können im Rahmen dieser Anmeldung grundsätzlich auch andere Gewebe wie Aramidfasergewebe oder Kohlefasergewebe Verwendung finden.

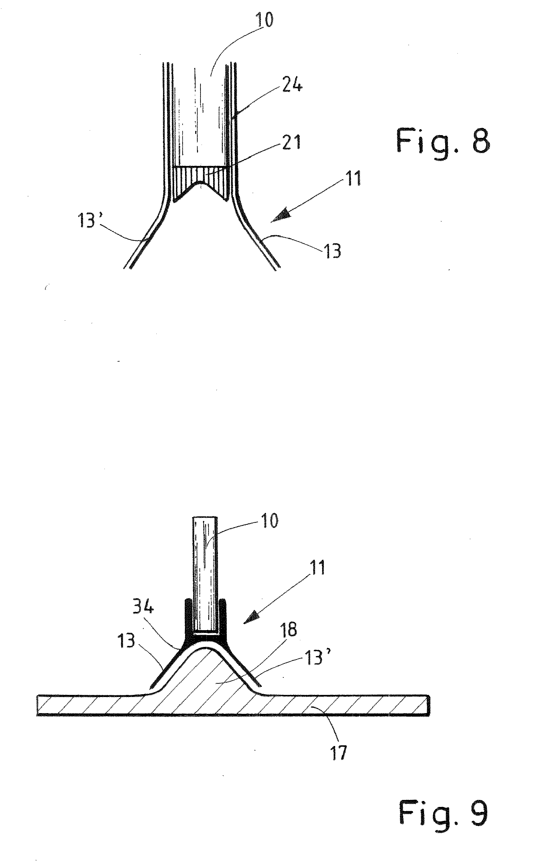

Fig. 8 zeigt schematisch eine Schnittdarstellung durch einen entsprechenden Stegfuß eines Steges 10, wobei die Verbindungsseiten 13 und 13' entsprechend erkennbar sind. Die Verbindungsseiten 13 und 13' sind aus entsprechenden Glasfasergewebelagen 24 hergestellt, die integral mit den Glasfasergeweben 24 des Stegs ausgebildet sind. Zum Abstützen des Stegs 10 auf einem entsprechenden nicht dargestellten Stützkörper ist eine Stützauflage 21 vorgesehen, die beispielsweise aus glasfaserverstärktem Kunststoff oder Balsaholz oder einem ähnlich stabilen und leichten Material sein kann, um die Stabilität zu erhöhen.

Fig. 9 zeigt einen alternativen Steg 10 mit einem Stegfuß 11, bei dem der Steg 10 wie üblich im Stand der Technik hergestellt ist und im Querschnitt rechteckförmig ist. Der Stegfuß 11 weist ein Fußprofil 34 auf, in das der Steg 10 eingebracht wird, beispielsweise eingeklebt wird oder entsprechend verschraubt oder vernietet wird. Außerdem weist das Fußprofil 34 Verbindungsseiten 13 und 13' auf, die formkomplementär zu dem Stützkörper 18 sind, der in diesem Fall integral mit dem Gurt 17 ausgebildet ist, d.h. der Gurt 17 weist eine entsprechende Form auf, bei der ein entsprechender Stützkörper abschnittsweise vorgesehen ist. Der Stützkörper ist in diesem Fall auch im Querschnitt keilförmig mit abgerundeten Kanten.

Vorzugsweise wird der Stützkörper samt Überlaminate zusammen mit dem Gurt noch in der Gurtform mit einem RIM-Verfahren aufgebracht. Durch Wahl eines harten Stützkörpers kann die Schälbelastung minimiert werden. Anstelle der Herstellung des Gurtes mit Stützkörpern kann auch ein üblicher Gurt verwendet werden, der zum Aufbringen des Stützkörpers Setzvorrichtungen aufweist.

Das Fußprofil 34 aus Fig. 9 kann beispielsweise ein Strangpressprofil aus einem Harz-/Pulvergemisch sein. Es kann auch ein glasfaserverstärktes Kunststoffprofil sein, das entsprechend laminiert wurde.

Die Erfindung löst Probleme mit der Stegverklebung in Schalenbauweise hergestellter Baugruppen wie Tragflächen und Rotorblätter und beeinflusst positiv die Beulfestigkeit der Blattschalen. Die Herstellung entsprechender Flügel bzw. Rotorblätter gemäß der Erfindung ist sehr prozesssicher und spart Formbelegungszeit, da der Steg oder die Stege ohne Zwischentrocknung nass-in-nass in beide Schalenhälften verklebt werden kann bzw. können. Zudem findet bei der Stegpositionierung eine Art Selbstzentrierung der Stege statt, was sicherstellt, dass die Stege immer an der korrekten Gurtposition verklebt sind. Hiermit entfällt ein sehr aufwändiges und kostenintensives Positionierungstool.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 10,10': Steg
- 11, 11': Stegfuß
- 12, 12': Stegfuß
- 13, 13': Verbindungsseite
- 14, 14': Verbindungsseite
- 15, 15': Verbindungsseite
- 16, 16': Verbindungsseite
- 17, 17': Gurt
- 18, 18', 18",18'": Stützkörper
- 19, 19' 19",19"': Laminatlage
- 20: Kleber
- 21: Stützauflage
- 22,22': Blattschale
- 23, 23', 23", 23'": Abreißgewebe
- 24: Glasfasergewebe
- 25: erster Formkörper
- 26: zweiter Formkörper
- 27: dritter Formkörper
- 28: Füllkörper
- 29: Vakuumfolie
- 30, 30': Dichtband
- 31: Zentrierstift
- 32: Gurtform
- 33, 33': Aussparung
- 34: Fußprofil
- 35: Druckseite
- 36: Saugseite

- 37: Rotorblatt
- 38, 38': Längserstreckung
- α: Keilwinkel

## Patentansprüche

1. Steg (10, 10') mit zwei Stegfüßen (11, 11', 12, 12') zur Verbindung einer Druckseite (35) mit einer Saugseite (36) eines Flügels (37), wobei der Steg (10, 10') eine Längserstreckung (38) aufweist, die quer zur Erstreckung des Stegs (10, 10') von der Saugseite (36) zur Druckseite (35) ist, **dadurch gekennzeichnet, dass** wenigstens ein Stegfuß (11, 11', 12, 12') quer zur Längserstreckung (38) zwei auf entgegengesetzten Seiten des Stegs (10, 10') angeordnete Verbindungsseiten (13-16') aufweist.

2. Steg (10, 10') nach Anspruch 1, **dadurch gekennzeichnet, dass** beide Stegfüße (11-12') jeweils zwei Verbindungsseiten (13-16') aufweisen.

3. Steg (10, 10') nach Anspruch 1 oder 2, **dadurch gekennzeichnet, dass** die Verbindungsseiten (13-16') des Stegfußes (11-12') gabelförmig im Querschnitt quer zur Längserstreckung (38) zueinander sind.

4. Steg (10, 10') nach einem der Ansprüche 1 bis 3, **dadurch gekennzeichnet, dass** der Stegfuß (11-12') wenigstens teilweise formkomplementär mit einem im Querschnitt keilförmigen oder gewölbten Stützkörper (18-18'") und/oder eine Blattschale (22, 22') und/oder einem Gurt (17, 17') einer Blattschale (22, 22') des Flügels (37) ist.

5. Steg (10, 10') nach einem der Ansprüche 1 bis 4, **dadurch gekennzeichnet, dass** der Stegfuß (11-12') einstückig mit dem Steg (10, 10') ist oder als Aufsatz (34) mit dem Steg (10, 10') verbunden ist.

6. Flügel (37) mit einem Steg (10, 10') nach einem der Ansprüche 1 bis 5 und einem Stützkörper (18-18"'), der an der Saugseite (36) oder Druckseite (35) innen in dem Flügel (37), insbesondere an einem Gurt (17, 17'), angeordnet ist und mit einem Stegfuß (11-12') verbunden ist.

7. Flügel (37) nach Anspruch 6, **dadurch gekennzeichnet, dass** sowohl an der Druckseite (35) als auch an der Saugseite (36) ein Stützkörper (18-18'") angeordnet ist, der mit jeweils einem Stegfuß (11-12') verbunden ist.

8. Flügel (37) nach Anspruch 6 oder 7, **dadurch gekennzeichnet, dass** der Stützkörper (18-18'") im Querschnitt quer zu dessen Längserstreckung (38') keilförmig oder gewölbt, insbesondere konvex, ausgebildet ist.

9. Flügel (37) nach einem der Ansprüche 6 bis 8, **dadurch gekennzeichnet, dass** der Stützkörper (18-18'") eine Dichte von weniger als 200 kg/m³, insbesondere weniger als 100 kg/m³, insbesondere weniger als 35 kg/m³, aufweist.

10. Verwendung eines Stützkörpers (18-18'") innen an der Saugseite (36) und/oder Druckseite (35) eines Flügels (37) zur Verbindung der Saugseite (36) und der Druckseite (35) mit einem Steg (10, 10'), der sich von der Saugseite (36) zur Druckseite (35) erstreckt, wobei der Stützkörper (18-18'") auf einem Gurt (17, 17') angeordnet ist oder einstückig mit dem Gurt (17, 17') ist.

11. Verwendung nach Anspruch 10, **dadurch gekennzeichnet, dass** der Stützkörper (18-18'") längsaxial zum Flügel (37) angeordnet ist und im Querschnitt quer zu seiner Längserstreckung (38) keilförmig oder gewölbt, insbesondere konvex, ausgebildet ist.

12. Verfahren zum Herstellen eines Flügels (37) mit einer Druckseite (35) und einer Saugseite (36), wobei auf der Druckseite (35) und auf der Saugseite (36) jeweils wenigstens ein Gurt (17, 17') vorgesehen ist, wobei auf wenigstens einem Gurt (17, 17') ein Stützkörper (18-18'") aufgebracht ist oder wird, wobei ein Steg (10, 10') nach einem der Ansprüche 1 bis 5 mit einem Stützkörper (18-18'") derart verklebt wird, dass der Stützkörper (18-18'") zwischen die Verbindungsseiten (13-16') des Stegfußes (11-12') eingepasst wird.

13. Verfahren nach Anspruch 12, **dadurch gekennzeichnet, dass** auf jeder Seite (35 und 36) des Stegs (10, 10') ein Stützkörper (18-18'") zwischen die Verbindungsseiten (13-16') der Stegfüße (11-12') eingepasst wird.
